# EUROPÄISCHE PATENTSCHRIFT

(11) **EP 0 333 242 B1**
(45) Veröffentlichungstag und Bekanntmachung des Hinweises auf die Patenterteilung: **08.09.1993**
(21) Anmeldenummer: 89200413.6
(22) Anmeldetag: 20.02.1989
(51) Int. Cl.: C21B 3/08

(54) **Verfahren und Vorrichtung zum Granulieren flüssiger Schlacken**
Process and apparatus for granulating molten slag
Procédé et installation pour la granulation de laitier liquide

(30) Priorität: 09.03.1988 DE 3807720
(43) Veröffentlichungstag der Anmeldung: 20.09.1989
(73) Patentinhaber: NORDDEUTSCHE AFFINERIE AG, D-20033 Hamburg (DE)
(72) Erfinder: Hansen, Uwe-Jens, D-2050 Hamburg 80 (DE); Marnette, Werner, Dr., D-2114 Hollenstedt (DE)
(74) Vertreter: Rieger, Harald, Dr.

(56) Entgegenhaltungen:
- FR-A- 2 296 691
- LU-A- 79 466
- LU-A- 84 643
- PATENT ABSTRACTS OF JAPAN, Band 1, Nr. 54, 25 Mai 1977, Seite 389 C77#

## Beschreibung

Die Erfindung betrifft ein Verfahren zum Granulieren flüssiger, metallurgischer Schlacke, wobei die schmelzflüssige Schlacke in eine um die Längsachse gedrehte Trommel mit außen gekühltem Trommelmantel eingebracht, an der gekühlten Innenwand der Trommel verfestigt und granuliert aus der Trommel ausgetragen wird, und eine Vorrichtung hierzu.

Beim Schmelzen von Erzen und beim Feinungs- oder Frischprozeß von Rohmetall werden üblicherweise große Mengen geschmolzener Schlacke hoher Temperatur erzeugt. Ein Verfahren der eingangs genannten Art zum Verfestigen und Granulieren der flüssigen Schlacke mit Hilfe einer Drehtrommel ist aus DE-A-2 558 908 bekannt. Die Drehtrommel ist geneigt angeordnet und wird an der oberen Stirnseite mit flüssiger Schlacke beschickt. Die verfestigte Schlacke löst sich von selbst von der Innenwand der Trommel und fällt in Stücken ab.

Der Erfindung liegt die Aufgabe zugrunde, ein einfaches, leicht handhabbares und wirtschaftlich durchzuführendes Verfahren zum Stückigmachen bzw. Granulieren metallurgischer Schlacken zu schaffen sowie eine geeignete Vorrichtung zur Durchführung des Verfahrens bereitzustellen.

Ausgehend vom eingangs genannten Verfahren besteht die Lösung erfindungsgemäß darin, daß die Längsachse der Trommel horizontal verläuft, die schmelzflüssige Schlacke durch eine Gießrinne auf den unteren Bereich der Innenwand der Trommel ausgegossen wird, wobei sich die Gießrinne über den gekühlten Trommelbereich erstreckt, und nach etwa einer 3/4-Trommelumdrehung ein erstarrter Schlackenfilm mechanisch von der Innenwand abgetrennt und Schlackengranulat ausgetragen wird.

Beim Verfahren der Erfindung wird die schmelzflüssige Schlacke auf der gesamten Länge des gekühlten Trommelbereichs auf der Innenwandung im Bereich der unteren Scheitellinie kontinuierlich oder diskontinuierlich abgegossen. Dieser Abguß kann z.B. aus einem in einer Gießvorrichtung hängenden Schlackenkübel über die Gießrinne erfolgen, die im Bereich der unteren Scheitellinie der Trommel in die Trommel eintritt. Da der Trommelmantel im Bereich der Abgießzone gekühlt wird, tritt an der Innenwand ein Anhaften und Verfestigen der schmelzflüssigen Schlacke ein. Infolge der Drehbewegung der Trommel wird die anhaftende Schlacke als mehr oder minder starker Schlackenfilm von bis zu 5 mm Dicke und mehr auf der Innenwand mitgenommen und weiter abgekühlt und verfestigt. Wenn der Schlackenfilm etwa eine 3/4-Umdrehung der Trommel zurückgelegt hat, wird er mittels einer Abtrennvorrichtung in stückig-granulierter Form abgelöst. Eine solche Abtrenn- oder Schälvorrichtung kann aus einem Abstreifer oder einer Klopfeinrichtung oder aus beiden oder ähnlichen Einrichtungen bestehen.

Die Abtrennvorrichtung erstreckt sich an der Innenwand über die gesamte Länge des gekühlten Bereichs des Trommelmantels. Die abgetrennten Schlackengranulate oder kleinstückigen Schlackenschalen werden unterhalb des Abstreifers in einer geeigneten Vorrichtung aufgefangen und aus der Trommel ausgetragen, zweckmäßig mit einer Schwingförderrinne. Diese ragt aus dem Austragsende der Trommel heraus und legt das Schlackengranulat auf einer weiteren geeigneten Fördereinrichtung (z.B. Transportband oder fahrbarer Behälter) ab. Um zu vermeiden, daß abgetrenntes Schlackengranulat aus der Förderrinne in die Gießrinne oder in die Schlackenschmelze fallen, wird zweckmäßigerweise im Innern der Trommel unterhalb der Schwingförderrinne ein gegen die Horizontale in Austragsrichtung geneigtes, kühlbares Abdeck- bzw. Auffangblech vorgesehen. Letzteres hat praktisch die Breite des Trommeldurchmessers und die Länge des Trommelmittelteils. Das Abdeckblech wird von Zeit zu Zeit von ggf. angehäuftem Schlackengranulat gereinigt oder es trägt ein geeigneter Neigungswinkel zur Selbstreinigung und Austrag bei.

Das Verfahren der Erfindung eignet sich zur Granulierung von metallurgischen Schlacken jeder Art, insbesondere jedoch zum Granulieren von Schlacken aus Konvertern der primären und sekundären Kupfergewinnung. Die Schlacke wird in dem Verfahren der Erfindung mit einer Anfangstemperatur von ca. 1100 bis 1200°C in die Trommel eingetragen und als verfestigter Schlackenfilm einer Temperatur von ca. 600°C ausgetragen. Die abgetrennten Granulate, unregelmäßig geformte Schalenteile oder plattenartige Stücke, haben eine Dicke von etwa 5 mm und ca. 50 mm Ausdehnung.

Der Vorteil des Verfahrens zur Granulierung von Schlacke gemäß der Erfindung besteht darin, daß über die Drehbewegung der Trommel stets frische Kühlflächen für die schmelzflüssige Schlacke zur Verfügung gestellt und ideale Erstarrungsbedingungen für die Schlacke schlechter Wärmeleitfähigkeit gewährleistet werden. Das aufgeheizte Kühlwasser kann einer Anlage zur Wärmerückgewinnung zugeführt werden. Darüber hinaus können beim Gußvorgang entstehender Rauch und Dämpfe in einfacher Weise quantitativ erfaßt werden.

Die Erfindung betrifft ferner eine Drehtrommel zur Durchführung des Verfahrens gemäß der Erfindung, vgl. die Patentansprüche 2 bis 5. Die Vorrichtung besteht im wesentlichen aus der horizontalen, zylinderförmigen Granuliertrommel mit Kühleinrichtungen im Mittelteil und zwei angeflanschten Kopfteilen, welche mit Laufring und Abdeckhaube bzw. Trommelabdeckung, Laufring und Zahnkranz versehen sind. Der Zahnkranz dient dem Trommelantrieb in an sich bekannter Weise. Der Antrieb ist auf eine Umdrehungsgeschwindigkeit der Trommel von ca. 1 bis 2 U/min ausgelegt. Der Mittelteil der erfindungsgemäßen Trommelvorrichtung hat bei einem Durchmesser von ca. 300 cm eine Länge von ca. 300 bis 350 cm, während die beiden Kopfteile jeweils eine Länge von ca. 150 cm besitzen.

Der Mittelteil der erfindungsgemäßen Drehtrommel weist Kühleinrichtungen für den Trommelmantel auf. Diese Kühleinrichtungen, wie Spritzdüsen, sind mindestens im Ausgießbereich der flüssigen Schlacke außerhalb und unterhalb des Trommelmantels angeordnet. Hierdurch wird ein sofortiges Anhaften eines Schmelzenfilms bewirkt. Zweckmäßig sind aber auch Düsen über dem Trommelmantel angeordnet. Auf diese Weise wird praktisch der gesamte Mantel der sich drehenden Trommel mit Kühlwasser berieselt. Das aufgeheizte Kühlwasser wird in einer Wanne unterhalb der Trommel aufgefangen und kann einer Anlage zur Wärmerückgewinnung zugeführt werden.

Im Innern der erfindungsgemäßen Drehtrommel in deren Mittelteil ist im oberen Bereich der Innenwandung eine Klopf- und/oder Schälvorrichtung zur Ablösung des erstarrten Schlackenfilms angebracht. Die Klopfvorrichtung kann beispielsweise eine Hammerstation sein, die in Drehrichtung der Trommel gesehen, zweckmäßig einem Kratzer vorgeschaltet ist. Direkt unterhalb der Klopf- und/oder Schälvorrichtung ist eine Schwingförderrinne zum Austrag der abgetrennten Schlackengranulate angeordnet. Gegebenenfalls von der Schwingförderrinne herabfallende Schlackenteile werden von einem darunter angebrachten kühlbaren, gegen die Horizontale in Austragsrichtung geneigten Auffangblech aufgefangen, so daß die flüssige Schlackenschmelze nicht mit bereits erstarrten Schlackenteilen durchsetzt wird. Das Auffangblech hat etwa die Breite des Trommeldurchmessers und die Länge des Mittelteils der Trommel. Der Austritt der Trommel ist mit einem nicht mitdrehenden, scheibenartigen Boden im wesentlichen verschlossen.

Dieser, mit einem Absaugstutzen zur Erfassung von Rauch und Dämpfen versehene Verschlußboden dient weiterhin als Träger und Auflager für die Gießrinne, die Schwingförderrinne und das Abdeckblech. Der Eintritt der Trommelvorrichtung sowie die davor angeordnete Gießvorrichtung sind weitgehend durch eine Blechhaube abgedeckt, wodurch eine gerichtete Gasströmung durch die Trommel bewirkt wird.

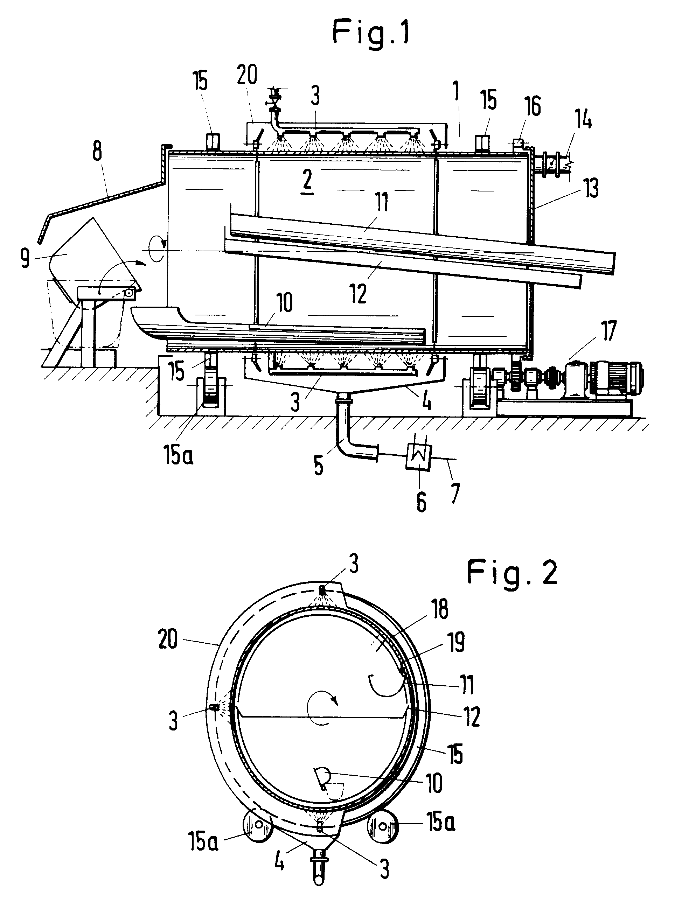

In den Figuren 1 und 2 ist die erfindungsgemäße Vorrichtung näher dargestellt. Fig. 1 zeigt einen Längsschnitt und Fig. 2 einen Querschnitt durch die erfindungsgemäße Trommelvorrichtung. In den Figuren 1 und 2 haben die Bezugszeichen folgende Bedeutung:
(1) Kühltrommel
(2) Mittelteil der Kühltrommel; Gießbereich der Schlackenschmelze
(3) Bedüsungsvorrichtung
(4) Auffangwanne für das Kühlwasser
(5) Kühlwasser-Ablaufrohr
(6) Wärmetauscher
(7) Kühlwasserrücklauf zur Bedüsungseinrichtung
(8) Abdeckhaube für Gießvorrichtung und Trommeleintritt
(9) Gießvorrichtung
(10) Gießrinne
(11) Schwingförderrinne
(12) Kühlbares Abdeck- bzw. Auffangblech
(13) Verschlußboden (nicht mitdrehend)
(14) Absaugstutzen
(15) Laufringe mit Laufrollen (15a)
(16) Zahnkranz
(17) Antriebsvorrichtung
(18) Klopfvorrichtung
(19) Schälvorrichtung
(20) Abdeckgehäuse
Die Vorteile der Erfindung sind darin zu sehen, daß durch die Drehbewegung der Trommel stets neue Kühlflächen an der Innenwand für die auftreffende Schmelze zur Verfügung stehen un damit ideale Erstarrungsbedingungen für die schlecht wärmeleitende Schlacke gewährleistet werden. Die filmartig erstarrte Schlacke läßt sich leicht unter weiterem Zersprengen von der Innenwand abtrennen.

Die Erfindung wird anhand der Figuren 1 und 2 und eines Ausführungsbeispiels näher und beispielhaft erläutert.

In eine Vorrichtung der in Fig. 1 dargestellten Art wird mittels eines Schlackenkübels, der in einer Kübelgießvorrichtung (9) hängt, Konverterschlacke einer Kupferhütte mit einer Temperatur von 1100 bis 1200°C und von der Zusammensetzung
5 bis 45 % Cu
5 bis 30 % Pb
10 bis 35 % SiO₂
in einer Menge von 35 t/h kontinuierlich in den Mittelteil (2) im unteren Bereich der Kühltrommel (1) eingegossen. Der Eintrag erfolgt über eine Gießrinne, die um ihre Längsachse drehbar ist. Die Stahltrommel dreht sich mit einer Geschwindigkeit von 1 bis 1,5 U/min und der Trommelmantel wird durch Bedüsung mit Wasser gekühlt. Der Kühlwasserbedarf beträgt bei einer Temperaturdifferenz von 10°C etwa 350 m³/h. Durch dosierte Zuführung der flüssigen Schlacke auf die Innenwandung des Mittelteils (2) bildet sich infolge der Drehbewegung ein dünner spontan erstarrender Schlackenfilm von etwa 3 bis 5 mm Dicke. Nach etwa einer 3/4-Drehung der Trommel (1) ist der Schlackenfilm auf eine Temperatur von etwa 600°C abgekühlt und wird mittels der Klopfvorrichtung (18) und/oder Schälvorrichtung (19) von der Innenwand abgelöst. Die kleinstückigen Schlackenschalen oder Schlackengranulate von ca. 5 mm Dicke fallen in eine Schwingförderrinne (11) und werden von dieser ausgetragen und der weiteren Verwendung zugeführt. Eventuell aus der Schwingförderrinne (11) fallende Schlackenteile werden von dem gegen die Horizontale geneigten Abdeckblech (12) aufgefangen. Das aufgeheizte Kühlwasser wird einer Anlage zur Wärmerückgewinnung (6) zugeführt.

## Patentansprüche

1. Verfahren zum Granulieren flüssiger, metallurgischer Schlacke, wobei die schmelzflüssige Schlacke in eine um die Längsachse gedrehte Trommel (1) mit außen gekühltem Trommelmantel eingebracht, an der gekühlten Innenwand der Trommel verfestigt und granuliert aus der Trommel ausgetragen wird, dadurch gekennzeichnet, daß die Längsachse der Trommel (1) horizontal verläuft, die schmelzflüssige Schlacke durch eine Gießrinne (10) auf den unteren Bereich der Innenwand der Trommel ausgegossen wird, wobei sich die Gießrinne über den gekühlten Trommelbereich (2) erstreckt, und nach etwa einer 3/4-Trommelumdrehung ein erstarrter Schlackenfilm mechanisch von der Innenwand abgetrennt und Schlackengranulat ausgetragen wird.

2. Drehtrommel zum Granulieren schmelzflüssiger Schlacke, wobei die zylinderförmige, über Laufringe (15) auf Rollen (15a) drehbar gelagerte, mit einem Zahnkranzantrieb (16) versehene Trommel (1) einen außen kühlbaren Trommelmantel und Öffnungen für den Schmelzeeintrag und Austrag des Schlackengranulats aufweist, zur Durchführung des Verfahrens nach Anspruch 1, dadurch gekennzeichnet, daß die Trommel horizontal gelagert und beidseitig weitgehend geschlossen ist, einen Mittelteil (2) mit Außenkühlung des Trommelmantels aufweist, mit einer Gießrinne (10) versehen ist, die sich in der Trommel von der Schmelzeeintragsseite bis über den gesamten gekühlten Mittelteil (2) der Trommel erstreckt, und daß die Trommel mechanische Mittel (18,19,11) zum Abtrennen der verfestigten Schlacke von der Innenwand der Trommel und zum Austragen der abgetrennten Schlackenteile durch die der Eintragsseite gegenüberliegende Austragsseite aufweist.

3. Drehtrommel nach Anspruch 2, dadurch gekennzeichnet, daß mit dem oberen Bereich der Innenwand der Trommel (1) eine Klopf- und/oder Schälvorrichtung (18,19) zusammenwirkt.

4. Drehtrommel nach Anspruch 3, dadurch gekennzeichnet, daß in der Trommel (1) unterhalb der Klopf- und Schälvorrichtung (18,19) eine Schwingförderrinne (11) angeordnet ist.

5. Drehtrommel nach Anspruch 4, dadurch gekennzeichnet, daß in der Trommel (1) unterhalb der Schwingförderrinne (11) ein sich praktisch über den gesamten Durchmesser und die Länge des Trommelmittelteils (2) erstreckendes, gegen die Horizontale in Austragsrichtung geneigtes Abdeckblech (12) angeordnet ist.

## Claims

1. A process of granulating liquid metallurgical slag, wherein the molten slag is charged into a drum (1) rotating around its longitudinal axis, said drum has an externally cooled shell, the molten slag is solidified at the cooled inside surface of the drum and granulated slag is discharged from the drum, characterized in that the longitudinal axis of the drum has a horizontal orientation, the liquid slag is poured onto the inside surface of the drum in its lower region by a pouring trough (10), the pouring trough extends throughout the cooled portion (2) of the drum, and after about 3/4 of a revolution of the drum a solidified film of slag is mechanically removed from the inside surface and granular slag is discharged.

2. Rotating drum for granulating molten slag, wherein the cylindrical drum is rotatably mounted by rings (15) on rollers (15a), an annular gear for rotating the drum, the drum having an externally coolable shell and openings for charging molten material and for discharging granulated slag, which drum serves to carry out the process according to claim 1, characterized in that the drum is horizontally mounted and is substantially closed at both ends, the drum has a central portion (2) provided with means for externally cooling the shell of the drum, and a pouring trough, which extends in the drum from the end for charging the molten material throughout the whole cooled central portion (2), and mechanical means (18, 19, 11) in the drum for detaching solidified slag from the inner surface of the drum and for discharging detached portions of slag through the discharging end which is opposite to the charging end.

3. Rotating drum according to claim 2, characterized in that a rapping and/or peeling device (18, 19) is operating onto the top portion of the inner surface of the drum (1).

4. Rotating drum according to claim 3, characterized in that a vibratory conveying trough (11) is disposed below the rapping and peeling device (18, 19).

5. Rotating drum according to claim 4, characterized in that a covering plate (12) is disposed in the drum below the vibratory conveying trough (11) and extends virtually throughout the whole diameter and the length of the central portion (2) of the drum and is downwardly inclined toward the horizontal and the discharge direction.

## Revendications

1. Procédé de granulation de laitier métallurgique liquide dans lequel le laitier fondu liquide est introduit dans un tambour tournant autour de son axe longitudinal et comportant une enveloppe refroidie à l'extérieur, est solidifié sur la paroi interne refroidie du tambour et est enfin évacué granulé du tambour, caractérisé en ce que l'axe longitudinal du tambour (1) s'étend horizontalement, le laitier fondu liquide est versé par un bec de coulée (10) dans la partie inférieure de la paroi interne du tambour, le bec de coulée s'étendant au-dessus de la partie refroidie (2) du tambour et, au bout d'environ 3/4 d'une révolution du tambour, un film de laitier solidifié est séparé mécaniquement de la paroi interne et un granulé de laitier est évacué.

2. Tambour rotatif pour granuler du laitier fondu liquide, dans lequel le tambour cylindrique (1), monté à rotation via des bagues de roulement (15) sur des rouleaux (15a) et pourvu d'un entraînement à couronne dentée (16) comporte une enveloppe refoidissable à l'extérieur et des ouvertures pour l'introduction de laitier fondu et l'évacuation du granulé de laitier, pour réaliser le procédé selon la revendication 1, caractérisé en ce que le tambour est monté horizontalement et est largement fermé sur les deux côtés, présente une partie centrale (2) avec refroidissement externe de l'enveloppe du tambour, est doté d'un bec de coulée (10), qui s'étend dans le tambour depuis le côté où l'on introduit la masse fondue jusque sur toute la partie centrale refroidie (2) du tambour, et le tambour comporte des moyens mécaniques (18, 19, 11) pour séparer le laitier solidifié de la paroi interne du tambour et pour évacuer les parties de laitier séparées par le côté d'évacuation opposé au côté d'introduction.

3. Tambour rotatif selon la revendication 2, caractérisé en ce qu'un dispositif de martèlement et/ou d'écroûtage (18, 19) coopère avec la partie supérieure de la paroi interne du tambour (1).

4. Tambour rotatif selon la revendication 3, caractérisé en ce qu'une rigole de transport oscillante (11) est agencée dans le tambour (1) en dessous du dispositif de martèlement et d'écroûtage (18, 19).

5. Tambour rotatif selon la revendication 4, caractérisé en ce qu'une tôle de recouvrement (12) inclinée vis-à-vis de l'horizontale dans la direction d'évacuation et s'étendant pratiquement sur tout la diamètre et sur toute la longueur de la partie centrale du tambour (2) est agencée dans le tambour (1) en dessous de la rigole de transport oscillante (11).
